## Europäisches Patentamt
## European Patent Office
## Office européen des brevets

(19)

(11) Veröffentlichungsnummer: **0 221 229**
**B1**

(12) # EUROPÄISCHE PATENTSCHRIFT

(45) Veröffentlichungstag der Patentschrift:
04.10.89

(51) Int. Cl.⁴: **B 60 N 1/10**

(21) Anmeldenummer: **86102509.6**

(22) Anmeldetag: **26.02.86**

(54) Polstersitz, insbesondere für den Einbau in ein als Multimobil ausgelegtes Kraftfahrzeug.

(30) Priorität: **08.11.85  DE 8531558 U**

(43) Veröffentlichungstag der Anmeldung:
**13.05.87 Patentblatt 87/20**

(45) Bekanntmachung des Hinweises auf die Patenterteilung:
**04.10.89 Patentblatt 89/40**

(84) Benannte Vertragsstaaten:
**BE DE FR IT NL**

(56) Entgegenhaltungen:
**FR-A-2 340 220**
**US-A-2 775 996**

(73) Patentinhaber: **Westfalia- Werke Franz Knöbel & Söhne KG, Am Sandberg 45, D-4840 Rheda- Wiedenbrück (DE)**

(72) Erfinder: **Braun, Dieter, Dipl.- Ing., Robert- Schumann- Strasse 6, D-4840 Rheda- Wiedenbrück (DE)**
Erfinder: **Gretencord, Johannes, Dipl.- Ing., Marburg 27, D-4840 Rheda- Wiedenbrück (DE)**
Erfinder: **Thülig, Werner, Pickhüttenweg 14, D-4835 Rietberg (DE)**

(74) Vertreter: **Müller, Gerd, Patentanwälte HEMMERICH- MÜLLER- GROSSE- POLLMEIER- MEY Hammerstrasse 2, D-5900 Siegen 1 (DE)**

EP 0 221 229 B1

## Beschreibung

Die Erfindung betrifft einen Polstersitz, insbesondere für den Einbau in ein als Multimobil ausgelegtes Kraftfahrzeug, dessen Sitzpolster und Lehnenpolster durch Lagenänderung relativ zu einem Unterbau, z. B. einem Gestell, aus wenigstens einer Sitzposition in mindestens eine Liegeposition umstellbar ist, wobei dem Sitzpolster ein dritter Polsterkörper gegenüber dem Unterbau um 180° klappbeweglich zugeordnet ist, der sich in der Sitzposition unterhalb des Sitzpolsters und in der Liegeposition vor dem Sitzpolster befindet, und wobei das Sitzpolster und das Lehnenpolster an ihren Querseiten durch ein Klappgelenk für eine Winkelbewegung ständig in Verbindung stehen.

Ein Polstersitz dieser Art ist durch US-A-2 775 996 bereits bekannt. Er ist dabei für sich allein geeignet, ein vollständiges Liegebett innerhalb eines als Multimobil ausgelegten Kraftfahrzeuges zu bilden, indem zusätzlich zum Fahrersitz und zum Beifahrersitz nur der Einbau eines einzigen Polstersitzes in das Kraftfahrzeug erforderlich ist, der die Benutzung als vollständiges Liegebett gewährleistet, ohne den Nutzungsbereich von Fahrersitz und Beifahrersitz zu beeinträchtigen.

Nachteilig bei dem vorbekannten Polstersitz ist jedoch, daß der dritte Polsterkörper völlig unabhängig von den das Sitzpolster und das Lehnenpolster bildenden Polsterkörpern am Unterbau gelagert und geführt wird. Hierdurch ist es notwendig, bei der Umwandlung des Polstersitzes in ein Liegebett auch eine getrennte Manipulation des dritten Polsterkörpers von den normalerweise als Sitzpolster und als Lehnenpolster dienenden beiden anderen Polsterkörper vorzunehmen. Nachteilig ist aber auch, daß zur sicheren Benutzung als Liegebett einerseits der das Lehnenpolster bildende Polsterkörper und andererseits der dritte Polsterkörper jeweils durch zusätzliche Schwenklaschen mit dem Unterbau gekuppelt werden müssen, wobei es jeweils nötig ist, besondere Kupplungsmittel zu betätigen, welche die Verbindung der Schwenklaschen mit den Polsterkörpern herstellen bzw. aufheben.

Aufgabe der Erfindung ist es, den kinematischen Gesamtaufbau eines gattungsgemäßen Polstersitzes zu vereinfachen sowie zugleich dessen Wirkungsweise zu verbessern und die Bedienbarkeit zu erleichtern.

Gelöst wird diese Aufgabe grundsätzlich durch die Kennzeichnungsmerkmale des Anspruchs 1, nämlich dadurch, daß auch der dritte Polsterkörper mit dem zweiten Polsterkörper an oder in der Nähe ihrer einander benachbarten Querseiten über Dreh- bzw. Klappgelenke ständig verbunden ist, daß die Achse der Dreh- bzw. Klappgelenke zwischen dem ersten Polsterkörper und dem zweiten Polsterkörper wenigstens in der Nähe von deren Oberseite liegt, während die Achse der Dreh- bzw. Klappgelenke zwischen dem zweiten Polsterkörper und dem dritten Polsterkörper an oder in der Nähe von deren Unterseite angeordnet ist, daß dabei sämtliche Dreh- bzw. Klappgelenke für eine Winkelbewegung von wenigstens annähernd 180° ausgelegt sind, daß weiterhin der zweite Polsterkörper in der Nähe der Dreh- bzw. Klappgelenke zum ersten Polsterkörper an seiner Unterseite in parallel zu seinen Seitenkanten verlaufenden Führungen auf dem Unterbau bzw. Gestell begrenzt verschiebbar sowie zugleich noch um wenigstens annähernd 90° nach oben verschwenkbar gehalten ist, daß darüber hinaus der zweite Polsterkörper in seiner das Sitzpolster bildenden Grundstellung am Unterbau bzw. Gestell gegen Verschiebung in den Führungen und gegen Anheben arretierbar ist, während zugleich der dritte Polsterkörper unterhalb des zweiten Polsterkörpers im Unterbau bzw. Gestell aufgenommen und am zweiten Polsterkörper lösbar fixiert ist, daß der erste Polsterkörper aus der Sitzposition in die Liegeposition durch Verlagerung des zweiten Polsterkörpers in den Führungen über die Dreh- bzw. Klappgelenke bewegbar ist, und daß gegebenenfalls der erste Polsterkörper als Lehnenpolster über ein Kniehebelsystem relativ zum Unterbau bzw. Gestell wenigstens stufenweise zwischen der aufgerichteten Sitzposition und der abgesenkten Liegeposition verstellbar abgestützt ist.

Die drei erfindungsgemäß miteinander gekuppelten und am Unterbau bzw. Gestell gehaltenen und geführten Polsterkörper können dabei solche Abmessungen erhalten, daß sie nicht nur in der Sitzposition des Polstersitzes eine optimale Benutzung desselben ermöglichen, sondern darüber hinaus in die Liegeposition auch als Liegebett mit den üblichen Abmessungen benutzbar ist.

Bewährt hat es sich dabei nach der Erfindung besonders, wenn entsprechend dem Anspruch 2 sämtliche Polsterkörper in Richtung der Achsen ihrer Dreh- bzw. Klappgelenke eine Abmessung haben, die mindestens der Breite zweier Sitz- und/oder Liegeplätze entspricht. Der Polstersitz läßt sich somit als doppelsitzige Bank und auch als Doppelbett benutzen.

Es hat sich nach der Erfindung des weiteren als vorteilhaft erwiesen, wenn der erste Polsterkörper und der dritte Polsterkörper in Richtung quer zu den Achsen der Dreh- bzw. Klappgelenke eine größere Abmessung haben als der zweite Polsterkörper und wenn diese Abmessung des dritten Polsterkörpers annähernd um die Höhe des Unterbaus bzw. Gestells größer ist als die Abmessung des zweiten Polsterkörpers. Trotz der ein bequemes Sitzen ermöglichenden, relativ schmalen Ausgestaltung des zweiten Polsterkörpers ergibt sich aufgrund dieser Maßnahmen in der Liegeposition des Polstersitzes eine Längenabmessung, die den üblichen Abmessungen von Liegebetten zumindest annähernd entspricht. In diesem Zusammenhang kann es sich auch als wichtig erweisen, wenn die Abmessung des ersten bzw. Lehnen-Polsterkörpers etwa der Abmessung des dritten Polsterkörpers entspricht und dessen freies Ende zu integrierten Kopfstützen ausgestaltet ist.

Die Erfindung sieht ferner vor, daß das freie Ende des dritten Polsterkörpers in seiner der Liegeposition entsprechenden Stellung auf einer Stützkonsole bzw. einem Sockel ruht.

Ein weiteres wichtiges Ausgestaltungsmerkmal der Erfindung besteht gemäß Anspruch 3 auch darin, daß die Dreh- bzw. Klappgelenke zwischen dem ersten und dem zweiten Polsterkörper jeweils an Seitenwangen von Winkelkonsolen ausgebildet sind, deren Sockelschenkel ihre Verankerung an der Rückseite bzw. Unterseite der Polsterkörper haben. Zugleich können nach Anspruch 4 die Dreh- bzw. Klappgelenke zwischen dem zweiten und dem dritten Polsterkörper von mehreren Scharnieren gebildet werden, deren Befestigungsschenkel jeweils an der Unterseite dieser Polsterkörper angreifen.

Eine funktionswichtige Weiterbildung eines Polstersitzes nach der Erfindung wird gemäß Anspruch 5 dadurch erreicht, daß am Sockelschenkel jeder mit dem zweiten Polsterkörper verbundenen Winkelkonsole eine um eine horizontale Achse frei drehbare Spurrolle lagert, die zwischen einer Trag- und einer Leitschiene der auf dem Unterbau bzw. Gestell angeordneten Führungen aufgenommen ist.

Als funktionswichtig hat es sich dabei herausgestellt, wenn nach der Lehre des Anspruchs 6 erfindungsgemäß die Führungen auf dem Unterbau bzw. Gestell einen wenigstens über einen Teil ihrer wirksamen Länge von hinten nach vorne ansteigenden Verlauf haben. Dabei können die Führungen etwa über die Hälfte ihrer wirksamen Länge einen stetig, aber relativ steil ansteigenden Verlauf haben, während sie über den übrigen Teil ihrer Länge jedoch etwa horizontal verlaufen. Eine zweckmäßige Ausgestaltung des Polstersitzes nach der Erfindung läßt sich erreichen, indem die Tragschienen der Führungen unmittelbar von dem oberen Holm eines Seitenrahmens gebildet sind, während als Leitschienen der Führungen Bügel dienen, die einerseits über ihre Enden und andererseits ggfs. durch Zwischenstege auf Abstand fest mit dem Holm des Seitenrahmens verbunden sind.

Nach Anspruch 7 schlägt die Erfindung weiterhin vor, daß die zwischen dem ersten Polsterkörper bzw. Lehnenpolster und dem Unterbau bzw. Gestell als Stützvorrichtung angeordneten Kniehebelsysteme jeweils an der Seitenwange der mit dem ersten Polsterkörper bzw. Lehnenpolster verbundenen Winkelkonsolen mit relativ großem Abstand von den Dreh- bzw. Klappgelenken angreifen.

Jedes dieser Kniehebelsysteme besteht dabei vorteilhaft aus zwei unmittelbar hintereinandergeschalteten Kniehebeln, wobei das Kniegelenk des zweiten Kniehebels in eine ortsfest an Unterbau bzw. Gestell angeordneten Führungskulisse verschiebbar gehalten ist, während der erste Hebelarm des ersten Kniehebels um eine ortsfeste oder gestellfeste Achse verschwenkbar ist und dessen Kniegelenk auf einem Kreisbogen hierzu verlagert.

Zweckmäßig sind weiterhin die an gegenüberliegenden Seiten des Unterbaus bzw. Gestells angeordneten beiden Kniehebelsysteme durch eine Welle miteinander bewegungsschlüssig gekuppelt und über einen Handhebel gemeinsam betätigbar. Wichtig ist dabei auch, daß der Betätigungs-Handhebel am Gestell in mehreren, z. B. fünf, Bedienungslagen, vorzugsweise durch eine Federrastvorrichtung, fixierbar ist und dadurch eine entsprechende Anzahl verschiedener Stützstellungen der Kniehebelsysteme festlegbar sind, die unterschiedliche Neigungslagen für den ersten Polsterkörper bestimmen.

In baulicher und funktioneller Hinsicht hat es sich bewährt, die orts- bzw. gestellfesten Führungskulissen für die Kniehebelsysteme bogenförmig gekrümmt verlaufen zu lassen und dabei von unten nach oben sowie zugleich von vorne nach hinten geneigt anzuordnen.

Die Arretiervorrichtungen für den zweiten Polsterkörper bestehen neuerungsgemäß vorteilhaft nach Anspruch 8 aus einem orts- bzw. gestellfesten Anschlagnocken und einem diesem zugeordneten Hakenschnäpper, mit denen ein Stütz- und Riegelnocken an der Unterseite des Polsterkörpers zusammenwirkt, wobei der Hakenschnäpper durch eine Handhabe ausrückbar ist.

Auch der dritte Polsterkörper kann am zweiten Polsterkörper durch einen Federschnäpper lagenfixiert werden, wobei der Federschnäpper mittels einer Handhabe ausrückbar ist. Nach Anspruch 9 kann entweder die Stützkonsole aus einem am dritten Polsterkörper verschwenkbar angelenkten Bügelfuß bestehen oder aber Stützsockel vom Unterbau benachbart eingebauter Polstersitze, insbesondere Fahrer- und Beifahrersitz des Kraftfahrzeuges gebildet werden. Dabei ist sinnvollerweise auch im Bereich der Dreh- bzw. Klappgelenke oder Scharniere zwischen dem zweiten und dem dritten Polsterkörper als Stützkonsole ein Bügelfuß od. dgl. verschwenkbar angelenkt und/oder es bildet eine konsolartige einwärtsgerichtete Abbiegung des Anschlagnockens eine Unterstützung für den zweiten Polsterkörper.

Schließlich erweist es sich nach der Erfindung noch als empfehlenswert, daß die Seitenwangen des Unterbaues bzw. des Gestells durch einen rohrförmigen Profilholm miteinander verbunden sind, der in seinem Inneren und/oder an seinen Enden Befestigungs- und Verankerungsstellen für Sicherheitsgurte aufweist, wobei Ausschnitte zu den Befestigungs- und Verankerungsstellen in seinem Inneren führen.

In der Zeichnung ist der Gegenstand der Erfindung als Ausführungsbeispiel dargestellt. Es zeigen

Figur 1 in schematisch vereinfachter Darstellung den Grundriß eines Wohnmobils mit einer eingebauten, erfindungsgemäßen Polstersitzbank bei normaler Gebrauchsposition des Fahrer- und Beifahrersitzes,

Figur 2 eine der Fig. 1 entsprechende Grundrißdarstellung, jedoch bei in Wohnstellung gebrachtem Fahrer- und Beifahrersitz sowie zwischen diesen und der neuerungsgemäßen Sitzbank in Gebrauchsposition befindlichem Tisch,

Figur 3 wiederum in schematischer Grundrißdarstellung das Wohnmobil bei in Liegeposition gebrachter, erfindungsgemäßer Sitzbank und zugleich nach vorne aus der Gebrauchsposition geklapptem Fahrer- und Beifahrersitz,

Figur 4 in räumlicher Darstellung die Sitzanordnung im Wohnmobil nach Fig. 1,

Figur 5 in räumlicher Darstellung die Sitzanordnung in Wohnmobil gemäß Fig. 2, die

Figuren 6a bis 6c in räumlicher Prinzipdarstellung die Umstellung eines erfindungsgemäßen Polstersitzes aus der Sitzposition a über eine Zwischenposition b in die Liegeposition c,

Figur 7 in schematisch vereinfachter Seitenansicht die Gesamtkinematik eines erfindungsgemäßen Polstersitzes bei Sitzpositions-Einstellung desselben,

Figur 8 eine der Fig. 7 entsprechende schematische Seitenansicht der Gesamtkinematik des Polstersitzes, jedoch in einer Übergangsstellung zwischen der Sitzpositions- und der Liegepositions-Einstellung,

Figur 9 eine weitere Zwischenstellung der Gesamtkinematik des Polstersitzes zwischen der Sitzpositions-Einstellung und der Liegepositions-Einstellung,

Figur 10 die Gesamtkinematik des Polstersitzes bei Liegepositions-Einstellung seiner Polsterkörper,

Figur 11 in ausführlicher Darstellung und Seitenansicht den auf einem Untergestell montierten Polstersitz in seiner Sitzpositions-Einstellung gemäß den Fig. 6a und 7

Figur 12 den in Fig. 11 gezeigten Polstersitz, jedoch von der gegenüberliegenden Seite aus gesehen,

Figur 13 in räumlicher Gesamtansicht das Gestell des Polstersitzes ohne die zugehörigen Polsterkörper,

Figur 14 in größerem Maßstab eine Einzelheit aus dem in Fig. 8 mit XIV gekennzeichneten Teilbereich des Polstersitzes von der Seite gesehen, und

Figur 15 eine Teilansicht in Pfeilrichtung XV der Fig. 13 in größerem Maßstab.

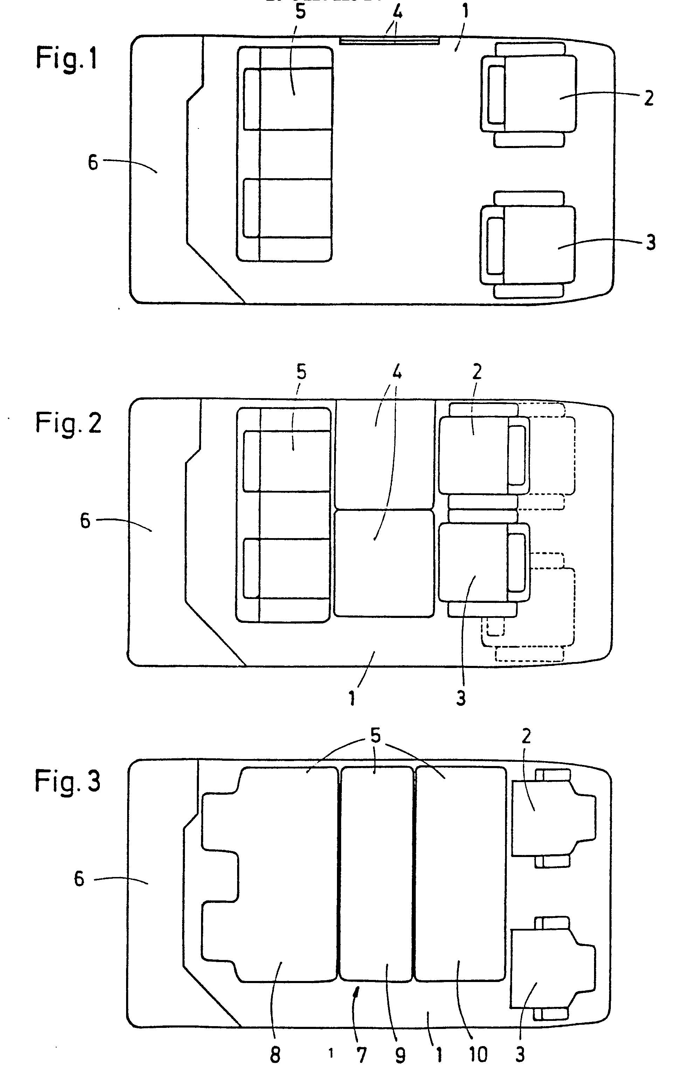

Die Figuren 1 bis 3 der Zeichnung zeigen in rein schematischer Grundrißdarstellung ein als sogenanntes Multimobil konzipiertes Kraftfahrzeug 1, welches im vorderen Bereich seines Aufbaues den Fahrersitz 2 und den Beifahrersitz 3 aufweist.

In dem an den Fahrersitz 2 und den Beifahrersitz 3 anschließenden Bereich des Aufbaues ist das Multimobil mit einem zusammenklappbaren Tisch 4 sowie einer Polstersitzbank 5 bestückt, während das hintere Ende seines Aufbaues einen Schrankeinbau 6 enthält.

Während der Fahrt des als Multimobil ausgelegten Kraftfahrzeugs 1 weist dieses in der Regel die aus Fig. 1 ersichtliche Anordnung der Einbauten auf. Dabei sind der Fahrersitz 2 und der Beifahrersitz 3 nach vorne gerichtet, und der Klapptisch 4 befindet sich in seiner Ruhestellung an der Seitenwand des Aufbaues. Die Polstersitzbank 5 verbleibt in ihrer normalen Sitzposition.

Soll das als Multimobil ausgelegte Kraftfahrzeug 1 zu Wohn- bzw. Aufenthaltszwecken genutzt werden, dann lassen sich gemäß Fig. 2 der Fahrersitz 2 und der Beifahrersitz 3 aus ihrer der Fig. 1 entsprechenden Normalposition jeweils um 180 Grad nach hinten drehen, so daß sie der Polstersitzbank 5 zugewendet sind. Dabei haben der Fahrersitz 2 und der Beifahrersitz 3 von der Polstersitzbank 5 einen solchen Abstand, daß sich dazwischen der Klapptisch 4 in seine Benutzungstellung bringen läßt, wie das die Fig. 2 erkennen läßt.

Das als Multimobil ausgeführte Kraftfahrzeug 1 ist aber auch zu Ruhe- und Schlafzwecken benutzbar. In der Ruhestellung des Klapptisches 4 sowie bei in Normalposition jeweils nach vorne geklapptem Fahrersitz 2 und Beifahrersitz 3 läßt sich nämlich die Polstersitzbank 5 zu einem Liegebett 7 mit zwei Schlafplätzen umwandeln, wie das in Fig. 3 der Zeichnung deutlich zu sehen ist.

Um diese Benutzungsart der Polstersitzbank 5 zu ermöglichen, weist diese drei Polsterkörper 8, 9 und 10 auf, von denen der Polsterkörper 8 üblicherweise das Lehnen- bzw. Rückenpolster der Polstersitzbank 5 bildet, während der Polsterkörper 9 üblicherweise deren Sitzpolster ist. Der dritte Polsterkörper 10 wird jedoch für die Sitzpositions-Einstellung der Polstersitzbank 5 nicht benötigt, sondern kommt nur in Gebrauchsstellung, wenn die Polstersitzbank 5 in die Liegepositions-Einstellung gemäß Fig. 3 gebracht wird, um das Liegebett 7 zu bilden.

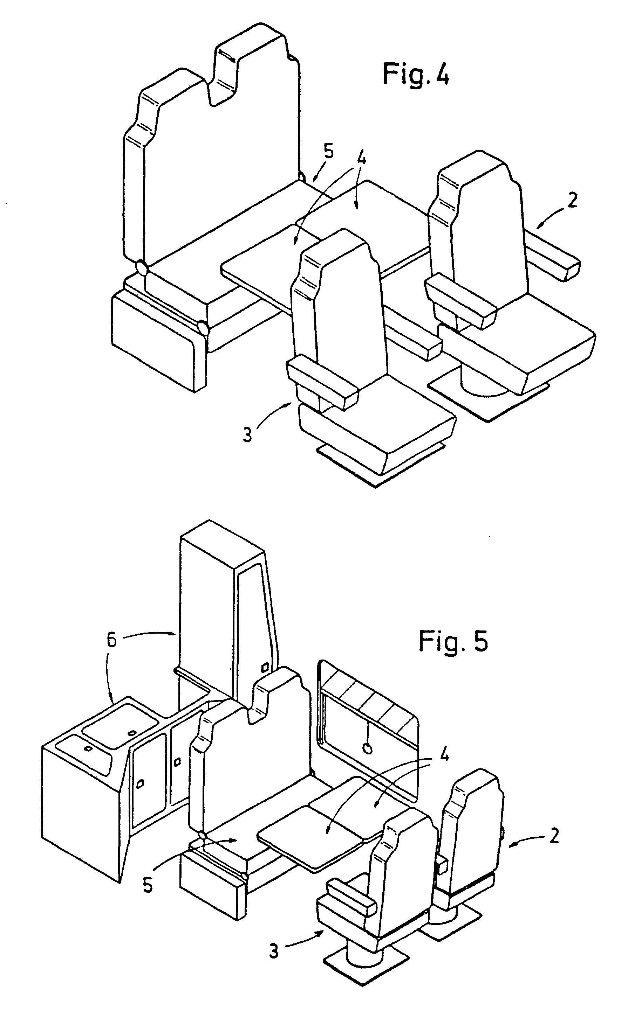

Die Fig. 4 zeigt in räumlicher Darstellung die Sitzanordnung nach Fig. 1. Dabei läßt sie erkennen, daß in diesem Falle bedarfsweise auch der Klapptisch 4 von der Polstersitzbank 5 aus benutzbar ist. Fig. 5 der Zeichnung gibt die der Fig. 2 entsprechende Anordnung zur Verdeutlichung in räumlicher Darstellung wieder.

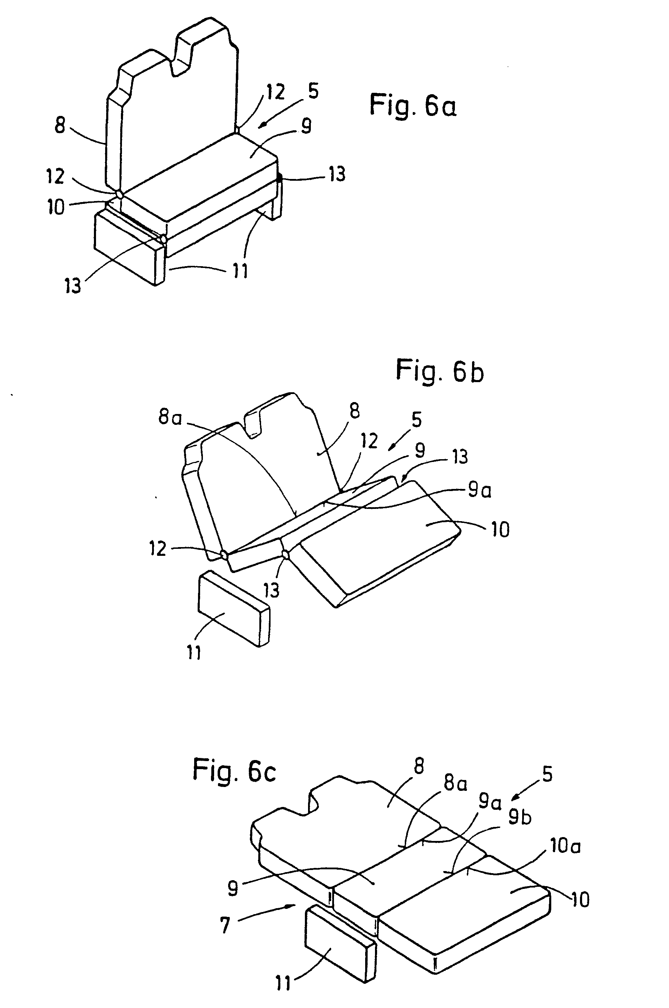

Den Fig. 6a bis 6c ist in vereinfachter räumlicher Darstellung zu entnehmen, wie die Polstersitzbank 5 aus ihrer normalen Sitzpositions-Einstellung (Fig. 6a) zur Bildung des Liegebettes 7 in die Liegepositions-Stellung (Fig. 6c) übergeführt werden kann. Um diese Positionsänderung zu ermöglichen, sind die drei Polsterkörper 8, 9 und 10 relativ zueinander und zu einem Unterbau bzw. Gestell 11 verlagerbar vorgesehen. Dabei läßt ein Vergleich der Figuren 6a, 6b und 6c ohne weiteres erkennen, daß die drei Polsterkörper 8, 9 und 10 untereinander in ständiger Gelenkverbindung stehen. Zwischen den beiden Polsterkörpern 8 und 9 sind dabei Dreh- bzw. Klappgelenke 12 vorgesehen, die wenigstens in der Nähe von deren Oberseite liegen und deren Achsen sich parallel zu den einander benachbarten Querseiten 8a und 9a der Polsterkörper 8 und 9 erstrecken. Auch die beiden Polsterkörper 9 und 10 stehen miteinander jeweils durch Dreh- bzw. Klappgelenke 13 in Verbindung, wobei diese aber in der Nähe von deren Unterseite angeordnet sind und sich parallel zu den Querseiten 9b und 10a dieser Polsterkörper 9 und 10 erstrecken.

Sowohl die Dreh- bzw. Klappgelenke 12 zwischen den beiden Polsterkörpern 8 und 9 als auch die Dreh- bzw. Klappgelenke 13 zwischen den beiden Polsterkörpern 9 und 10 sind so ausgelegt, daß sie Winkelbewegungen zwischen den benachbarten Polsterkörpern von wenigstens annähernd 130 Grad zulassen.

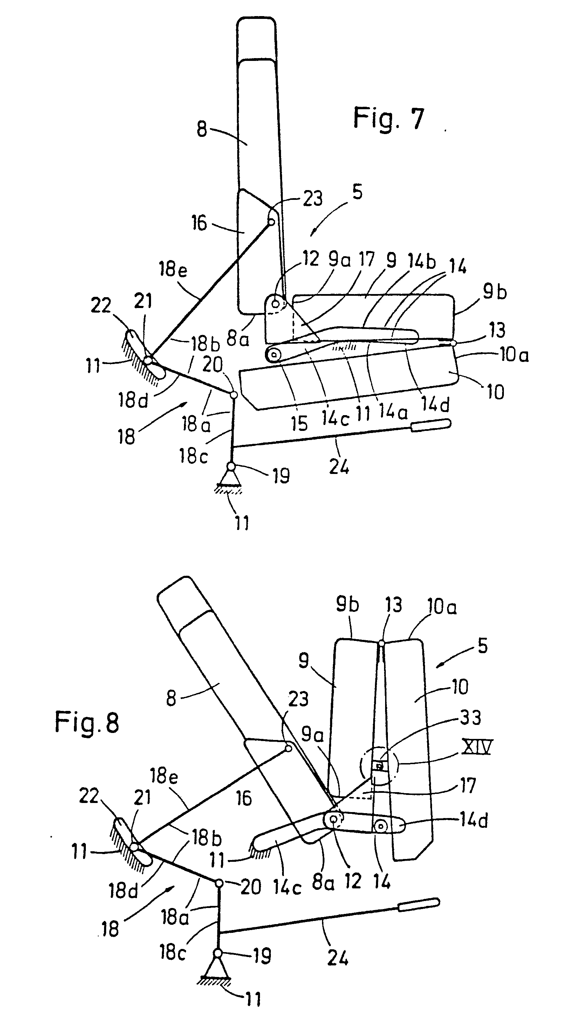

Den Fig. 7 bis 10 der Zeichnung ist in schematischer Darstellung der kinematische Gesamtaufbau und die Wirkungsweise der Polstersitzbank 5 deutlicher zu entnehmen als den Fig. 6a bis 6c. Dabei wird zunächst erkennbar, daß der zweite Polsterkörper 9, welcher üblicherweise das Sitzpolster bildet, an seiner Unterseite beidseitig in parallel zu seinen Seitenkanten verlaufenden Führungen 14 ruht, und zwar jeweils mittels Spurrollen 15, die jeweils zwischen eine untere Tragschiene 14a und eine obere Leitschiene 14b der Führungen 14 eingreifen.

Die Länge der beiden Führungen 14 entspricht dabei wenigstens annähernd der Breite des Polsterkörpers 9, so daß sich sämtliche Polsterkörper 8, 9 und 10 miteinander über eine entsprechende Strecke relativ zum ortsfesten Unterbau bzw. Gestell 11 in den Führungen 14 verfahren lassen.

Da der Polsterkörper 9 mittels der Spurrollen 15 in den Führungen 14 gehalten ist, läßt er sich zudem noch um die Achsen der Spurrollen 15 relativ zu den Führungen 14 wenigstens annähernd um 90 Grad nach oben verschwenken. Dabei ist es zweckmäßig, wenn der Schwenkwinkel des Polsterkörpers 9 um die Spurrollen 15 in Aufwärtsrichtung wenigstens annähernd 90 Grad beträgt.

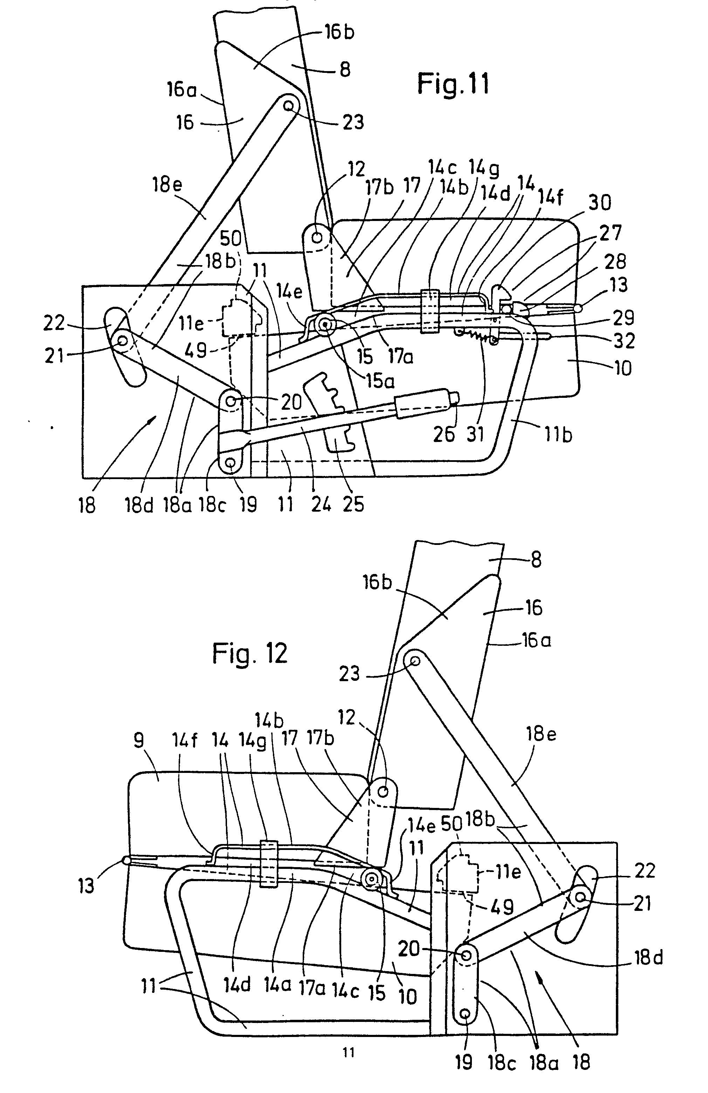

Den Fig. 7 bis 10, besonders aber den Fig. 11 und 12 ist zu entnehmen, daß die Führungen 14 für die Spurrollen 15 aus zwei verschiedenen Abschnitten 14c und 14d bestehen, wobei der Abschnitt 14c einen von hinten nach vorne ansteigenden Verlauf hat, während sich der daran anschließende Abschnitt 14d etwa horizontal erstreckt. Während des ersten Teils der Verschiebebewegung wird dadurch die hintere Querkante des Polsterkörpers 9 im Unterbau bzw. Gestell 11 um ein Ausmaß angehoben, welches der Steigungshöhe im Abschnitt 14c der Führungen 14 entspricht. Daran anschließend findet dann im Abschnitt 14d lediglich noch eine Horizontalverlagerung des Polsterkörpers 9 statt.

Aus den Fig. 11 und 12 läßt sich entnehmen, daß die Tragschienen 14a der Führungen 14 unmittelbar von dem oberen Holm eines Seitenrahmens des als Unterbau dienenden Gestells 11 gebildet werden können, während als Leitschienen 14a dieser Führungen 14 Bügel dienen, die einerseits über ihre Enden 14e und 14f sowie andererseits durch Zwischenstege 14g auf Abstand fest mit dem Holm des Seitenrahmens verbunden sind.

Der Polsterkörper 8 ruht in Winkelkonsolen 16, deren Sockelschenkel 16a an der Rückseite des Polsterkörpers 8 stützend anliegt, während ihre Seitenwange 16b neben der Querseite des Polsterkörpers 8 zu liegen kommt. Auch mit dem Polsterkörper 9 ist eine Winkelkonsole 17 verbunden, deren Sockelschenkel den Polsterkörper 9 untergreift, während ihre Seitenwange 17b neben seiner Querseite liegt. Die Seitenwangen 16b und 17b der Winkelkonsolen 16 und 17 stehen miteinander jeweils durch ein Dreh- bzw. Klappgelenk 12 in Verbindung.

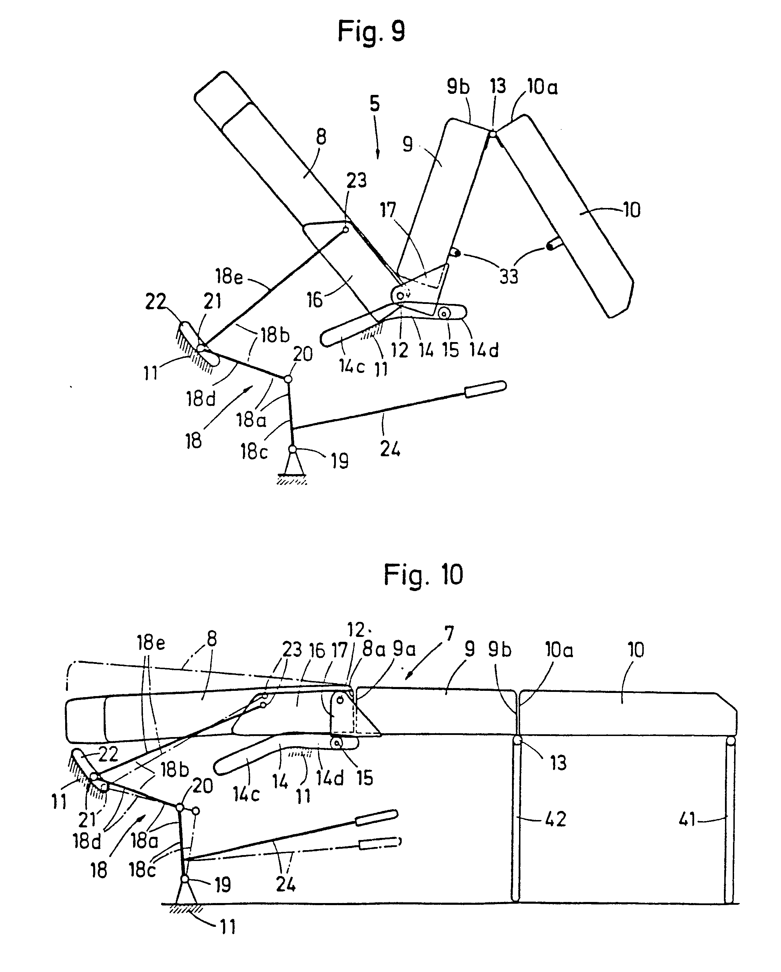

Der Polsterkörper bzw. das Lehnenpolster 8 ist gegen den Unterbau bzw. das Gestell 11 durch ein Kniehebelsystem 18 abgestützt, und zwar so, daß er bzw. es wenigstens stufenweise zwischen der aufgerichteten Sitzposition (Fig. 7, 11 und 12) und der abgesenkten Liegeposition (Fig. 10) verstellt werden kann.

Ein solches Kniehebelsystem 18 ist dabei an jeder Seite des Unterbaus bzw. Gestells 11 vorgesehen, um eine sichere und symmetrische Abstützung des Polsterkörpers bzw. Lehnenpolsters 8 zu gewährleisten. Jedes dieser Kniehebelsysteme 18 besteht dabei aus zwei unmittelbar hintereinandergeschalteten Kniehebeln 18a und 18b, wobei der erste Hebelarm 18c des Kniehebels 18 auf eine drehbar im Unterbau bzw. Gestell 11 gelagerte Welle 19 aufgekeilt ist. Das Kniegelenk 20, welches den ersten Hebelarm 18c mit dem zweiten Hebelarm 18d des Kniehebels 18a verbindet, bewegt sich daher auf einem Kreisbogen um die Längsachse der Welle 19. Der zweite Hebelarm 18d des Kniehebels 18a bildet zugleich den ersten Hebelarm des zweiten Kniehebels 18b und ist über das Kniegelenk 21 mit dem zweiten Hebelarm 18e des Kniehebels 18b gekuppelt. Während das Kniegelenk 21 des zweiten Kniehebels 18b in einer bogenförmigen Führungskulisse 22 am Unterbau bzw. Gestell 11 geführt wird, greift das andere Ende des Hebelarms 18e über ein Gelenk 23 an der Winkelkonsole 16 des Polsterkörpers bzw. Lehnenpolsters 8 an, wie das deutlich den Fig. 7 bis 12 entnommen werden kann.

Die bogenförmig gekrümmt verlaufenden Führungskulissen 22 sind am Unterbau bzw. Gestell 11 so vorgesehen, daß sie von unten nach oben sowie zugleich von vorne nach hinten geneigt verlaufen. Im Zusammenwirken mit den Kniehebelsystemen 18 wird auf diese Art und Weise in jedem Falle eine sichere Abstützung des Polsterkörpers bzw. Lehnenpolsters 8 gegen den Unterbau bzw. das Gestell 11 gewährleistet.

Die Betätigung der Kniehebelsysteme 18 zur Lagenänderung des Polsterkörpers bzw. Lehnenpolsters 8 erfolgt über einen Handhebel 24, der am Hebelarm 18c angreift und mit einer Rastkulisse 25 zusammenwirkt, die ortsfest am Unterbau bzw. Gestell 11 vorgesehen ist, wie das die Fig. 11 erkennen läßt. Die Rastkulisse 25 hat beim gezeigten Ausführungsbeispiel fünf verschiedene Rastpositionen, in denen sich der Hebel 24 durch eine Federrastvorrichtung jeweils selbsttätig fixieren kann. Auslösen läßt sich diese Federrastvorrichtung durch einen Druckknopf 26, der sich am freien Ende des Hebels 24 befindet und bspw. durch den Daumen einer Hand betätigt werden kann.

Normalerweise ist der Polsterkörper bzw. das Sitzpolster 9 in der aus den Fig. 7, 11 und 12 ersichtlichen Lage am Unterbau bzw. Gestell 1 arretiert, und zwar mittels einer Arretiervorrichtung 27, die mindestens einen fest am Unterbau bzw. Gestell 11 sitzenden Anschlag 28, welcher als Widerlager für einen Gegenanschlag 29 dient, der am Polsterkörper bzw. Sitzpolster 9 befestigt ist. Darüber hinaus gehört zur Arretiervorrichtung 27 aber noch ein Hakenschnäpper 30, der unter der Wirkung einer Feder 31 steht und durch diese so beaufschlagt wird, daß er den Gegenanschlag 29 am Polsterkörper bzw. Sitzpolster 9 übergreift, wie das die Fig. 11 erkennen läßt. Bei eingerücktem Hakenschnäpper 30 läßt sich der Gegenanschlag 29 also weder relativ zum Unterbau bzw. Gestell 11 anheben noch gegenüber diesem verschieben. Durch eine Handhabe 32 kann jedoch der Federschnäpper 30 entgegen der Wirkung der Feder 31 ausgerückt werden, so daß sich der Gegenanschlag 29 sowohl aus dem Bereich des Anschlags 28 als auch dem Bereich des Federschnäppers 30 der Arretiervorrichtung 27 bringen läßt. Nunmehr läßt sich der Polsterkörper bzw. das Sitzpolster 9 sowohl entlang den Führungen 14 des Unterbaues bzw. Gestells 11 über den vorgegebenen Längenbereich hinweg verfahren als auch um die Gelenkachse 15a der in die Führungen 14 eingreifenden Spurrollen 15 hochklappen, wie das die Fig. 8 und 9 erkennen lassen. Die Winkelbewegung des Polsterkörpers bzw. Sitzpolsters 9 relativ zum Unterbau bzw. Gestell 11 kann dabei bis zu 90 Grad betragen, wie das die Fig. 8 erkennen läßt.

Aufgrund der Verschiebebewegung und auch der Winkelbewegung des Polsterkörpers bzw. Sitzpolsters 9 relativ zu den Führungen 14 wird auch eine Verlagerungsbewegung des Polsterkörpers bzw. Lehnenpolsters 8 herbeigeführt, weil dieses einerseits über die Dreh- bzw. Klappgelenke 12 mit dem Polsterkörper bzw. Sitzpolster 9 in Verbindung steht, andererseits jedoch auch durch die Kniehebelsysteme 18 mit dem Gestell bzw. Unterbau 11 gekoppelt ist. Die Verlagerungsbewegung des Polsterkörpers bzw. Lehnenpolsters 8 ist dabei aus den Fig. 7 bis 10 der Zeichnung ohne weiteres erkennbar.

Damit der dritte Polsterkörper 10 des Polstersitzes 5 den Verlagerungsbewegungen des Polsterkörpers bzw. Sitzpolsters 9 relativ zum Unterbau bzw. Gestell 11 folgt, ohne daß er unerwünschte Bewegungen um die Scharniere 13 ausführt, ist zwischen den beiden Polsterkörpern 9 und 10 ein besonderer Federschnäpper 33 vorgesehen, und zwar so, daß er nur zugänglich wird, wenn die Polsterkörper 8 bis 10 in die Position gemäß Fig. 8 gebracht worden sind.

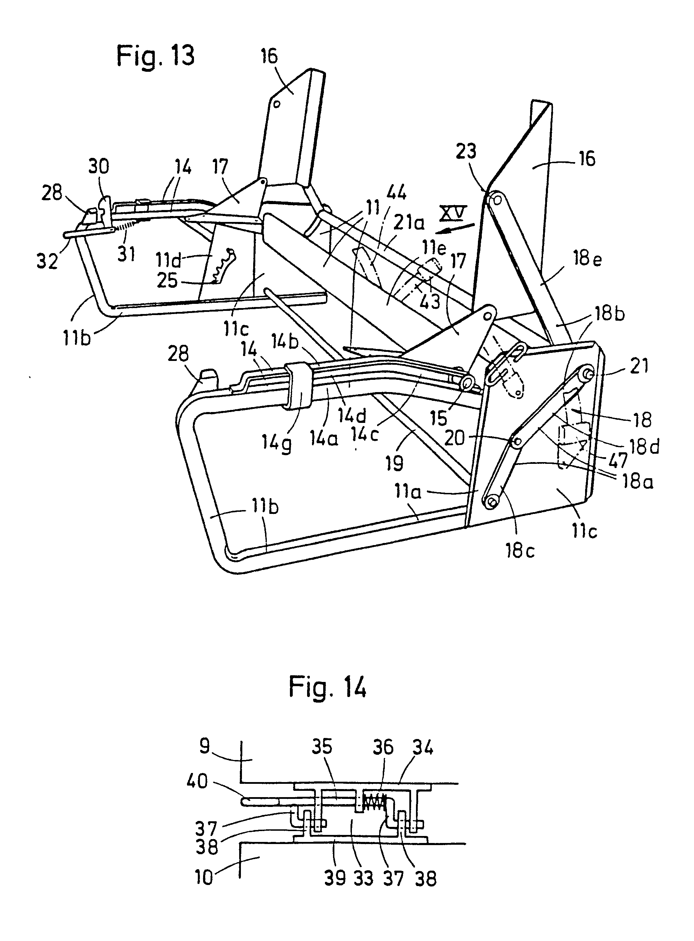

Gemäß Fig. 14 besteht der Federschnäpper 33 aus einem in einer Halterung 34 an der Unterseite des Polsterkörpers 9 axial verschiebbaren Bolzen 35, der durch eine Feder 36 beaufschlagt ist. Der Bolzen 35 ist dabei mit zwei Hakenriegeln 37 versehen, die mit zwei Riegelaugen 38 zusammenwirken, die sich an einer Halterung 39 an der Unterseite des Polsterkörpers 10 befinden. Die Hakenriegel 37 werden dabei normalerweise unter der Wirkung der Feder 36 mit den Riegelaugen 38 in Eingriff gehalten. Sie können jedoch durch eine Handhabe 40 ausgerückt werden, die in der aus Fig. 8 ersichtlichen Stellung der Polsterkörper 8, 9 und 10 zugänglich ist. Selbstverständlich wäre es auch denkbar, den Federschnäpper 33 zwischen den beiden Polsterkörpern 9 und 10 in ähnlicher Weise als Hakenschnäpper auszubilden, wie er im Bereich der Arretiervorrichtung 27 vorgesehen ist.

Die Liegepositions-Einstellung der Polsterkörper 8, 9 und 10 ist nach Fig. 10 der Zeichnung erreicht. Dabei ist es wichtig, daß zumindest das freie Ende des dritten Polsterkörpers 10 auf einer Stützkonsole oder einem Sockel 41 ruht. Dieser kann dabei von einem unmittelbar mit dem Polsterkörper 10 in Gelenkverbindung stehenden Bügelfuß gebildet werden, wie dies in Fig. 10 angedeutet ist. Ein ähnlicher Bügelfuß 42 läßt sich dabei auch im Bereich der Scharniere 13 zwischen den beiden Polsterkörpern 9 und 10 vorsehen, so daß auch dort eine zusätzliche Unterstützung herbeigeführt wird.

Anstelle des mit dem Polsterkörper 10 verbundene Bügelfußes 41 kann der Stützsockel für diesen aber auch von einem dem Unterbau benachbart eingebauten Polstersitz, z. B. dem Fahrersitz 2 und dem Beifahrersitz 3 gebildet werden, wie sie in den Fig. 1 bis 5 zu sehen sind. Damit sich der Polsterkörper 10 in der Liegepositions-Einstellung auf den Stützsockel des Fahrersitzes 2 und des Beifahrersitzes 3 aufsetzen läßt, brauchen Fahrersitz 2 und Beifahrersitz 3 lediglich nach vorne umklappbar mit ihrem Stützsockel verbunden zu sein.

In Fig. 13 der Zeichnung ist der Unterbau bzw. das Gestell 11 des Polstersitzes 5 bei abgenommenen Polsterkörpern 8, 9 und 10 gezeigt. Dabei ergibt sich, daß die beiden mit den Führungen 14 versehen Seitenteile 11a einen Seitenrahmen 11b aufweisen, der bspw. aus Vierkantrohren gebildet ist, und an den sich nach hinten jeweils aus Blech gefertigte Wangen 11c anschließen, in denen die Welle 19 der Kniehebelsysteme 18 gelagert ist und die auch die Führungskulisse 22 enthalten. Der eine seitenrahmen 11b ist darüber hinaus noch mit einer Platte 11d ausgestattet, in der sich die Rastkulisse 25 befindet, mit der die Rastvorrichtung des Handhebels 24 zusammenwirkt.

Die beiden Seitenteile 11a des Unterbaues bzw. Gestells 11 sind hinten, nämlich im Bereich der Seitenwangen 11c, durch einen rohrförmigen Profilholm 11e starr miteinander verbunden.

Erkennbar ist aus Fig. 13 ferner, daß nicht nur die Welle 19 für das Kniehebelsystem 18 in den beiden Seitenteilen 11a gelagert ist, sondern daß darüber hinaus auch die Kniegelenke 21 der beiden Kniehebel 18b durch eine parallel zum Rohrholm 11e liegende Achse 21a starr miteinander gekuppelt sind. Es ist hierdurch sichergestellt, daß die Kniegelenke 21 der beiden Kniehebel 18b in den bogenförmigen Führungskulissen 22 der Seitenwangen 11c eine synchrone Verlagerungsbewegung ausführen können und folglich eine einwandfreie Neigungsverstellung des Polsterkörpers bzw. Lehnenpolsters 8 sicherstellen.

Abschließend sei lediglich noch erwähnt, daß natürlich ohne weiteres die Möglichkeit besteht, die Polstersitzbank 5 auch so auszulegen, daß sie mehr als zwei Sitz- bzw. Liegeplätze bildet. Andererseits ist es aber auch denkbar, Polstersitze 5 in das als Multimobil ausgelegte Kraftfahrzeug 1 einzubauen, von denen jeder nur einen Sitz- bzw. Liegeplatz bildet. Durch Nebeneinanderanordnung mehrerer solcher Polstersitze in dem als Multimobil ausgelegten Kraftfahrzeug 1 kann dann im Grunde genommen problemlos die Ausstattung erhalten werden, wie sie in den Fig 1 bis 3 zu sehen ist. Vorteilhaft ist dabei, daß jeder einzelne Polstersitz auch für sich allein in ein Liegebett umgewandelt werden kann.

Der rohrförmige Profilholm 11e zwischen den Seitenwangen 11c des Unterbaues bzw. Gestells 11 ist so gestaltet und/oder dimensioniert, daß er Befestigungs- und auch Verankerungspunkte für Sicherheitsgurte bilden kann und auch die aus der zweckentsprechenden Beanspruchung der Sicherheitsgurte resultierenden Kräfte aufzunehmen vermag.

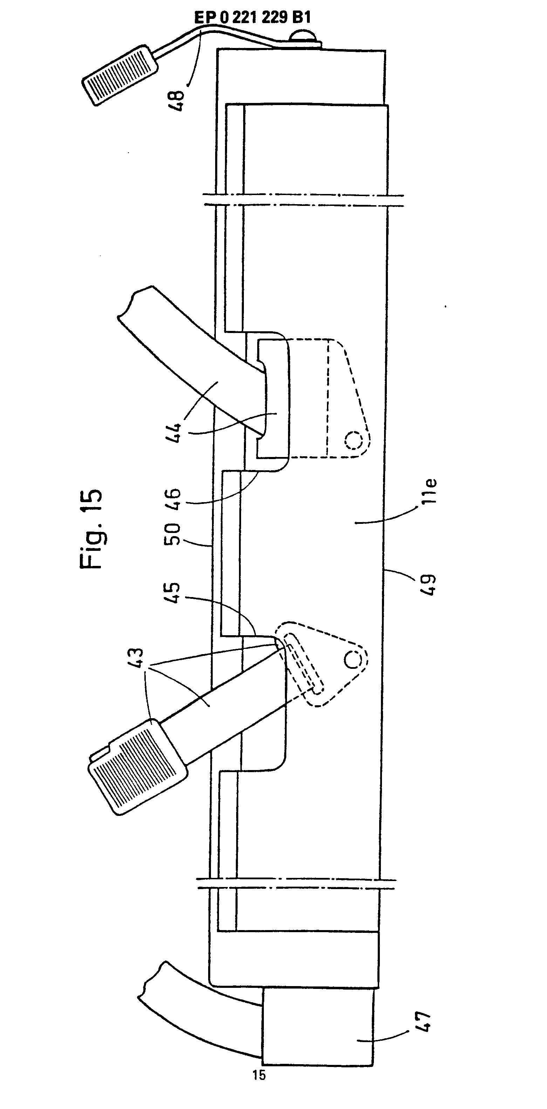

Im Innenraum des Profilholms 11e lassen sich dabei z. B. das Schloß 43 von Dreipunktgurten oder aber der Retraktor 44 von Zweipunktgurten unterbringen, wobei die Gurtführung nach oben durch Ausschnitte 45 und 46 geeigneter Größe bewirkt wird (Fig. 15).

Jeweils an den Enden des Profilholms 11e können Gurtroller 47 der Dreipunktgurte montiert oder auch Gurtpeitschen 48 der Zweipunktgurte befestigt werden, und zwar jeweils auf der Außenseite der durch den Profilholm 11e miteinander verbundenen Seitenwangen 11c.

Querschnittsform und Anordnung des Profilholms 11e zwischen den Seitenwangen 11c des Unterbaus bzw. Gestells 11 sind auch aus den Figuren 11 und 12 ersichtlich. Dabei ist andeutungsweise auch erkennbar, daß der Profilholm 11e aus einer unteren Halbschale 49 und einer oberen Halbschale 50 zusammengesetzt ist.

In der Liegeposition der Polstersitzbank 5, wie sie den Fig. 3, 6c und 10 entnommen werden kann, dient einerseits der Profilholm 11e als Stützauflage für den Polsterkörper 8, während hierbei andererseits der Anschlag 28 durch konsolenartige, einwärts gerichtete Abbiegung (Fig. 13) als Unterstützung des Polsterkörpers 9 dienen kann. Der Stützfuß 42 kann hierdurch entlastet oder sogar eingespart werden.

## Patentansprüche

1. Polstersitz (5) insbesondere für den Einbau in ein als Multimobil ausgelegtes Kraftfahrzeug (1) dessen Sitzpolster (9) und Lehnenpolster (8) durch Lagenänderung relativ zum Unterbau (11), z. B. einem Gestell, aus wenigstens einer Sitzposition in mindestens eine Liegeposition umstellbar ist, wobei dem Sitzpolster (9) ein dritter Polsterkörper (10) gegenüber dem Unterbau (11) um 180° klappbeweglich zugeordnet ist, der sich in der Sitzposition unterhalb des Sitzpolsters und in der Liegeposition vor dem Sitzpolster befindet, und wobei Sitzpolster (9) und Lehnenpolster (8) an ihren Querseiten durch ein Dreh- bzw. Klappgelenk (12) für eine gegenseitige Winkelbewegung in ständiger Verbindung stehen, dadurch gekennzeichnet, daß auch der dritte Polsterkörper (10) mit dem zweiten Polsterkörper (9) an oder in der Nahe ihrer einander benachbarten Querseiten (9b, 10a) über Dreh- bzw. Klappgelenke (13) ständig verbunden ist, daß die Achse der Dreh- bzw. Klappgelenke (12) zwischen dem ersten Polsterkörper (8) und dem zweiten Polsterköper (9) wenigstens in der Nähe von deren Oberseite liegt, während die Achse der Dreh- bzw. Klappgelenke (13) zwischen dem zweiten Polsterkörper (9) und dem dritten Polsterkörper (10) an oder in der Nähe von deren Unterseite angeordnet ist, daß dabei sämtliche Dreh- bzw. Klappgelenke (12 und 13) für eine Winkelbewegung von wenigstens annähernd 180° ausgelegt sind, daß weiterhin der zweite Polsterkörper (9) in der Nähe der Dreh- bzw. Klappgelenke (12) zum ersten Polsterkörper (8) an seiner Unterseite in parallel zu seinen Seitenkanten verlaufenden Führungen (14) auf dem Unterbau bzw. Gestell (11) begrenzt verschiebbar sowie zugleich noch um wenigstens annähernd 90° nach oben verschwenkbar gehalten ist (15), daß darüber hinaus der zweite Polsterkörper (9) in seiner das Sitzpolster bildenden Grundstellung am Unterbau bzw. Gestell (11) gegen Verschiebung in den Führungen (14) und gegen Anheben arretierbar ist (27), während zugleich der dritte Polsterkörper (10) unterhalb des zweiten Polsterkörpers (9) im Unterbau bzw. Gestell (11) aufgenommen und am zweiten Polsterkörper (9) lösbar fixiert ist (33), daß der erste Polsterkörper (8) aus der Sitzposition (7) in die Liegeposition durch Verlagerung des zweiten Polsterkörpers (9) in den Führungen (14) über die Dreh- bzw. Klappgelenke (12) bewegbar ist, und daß ggfs. der erste Polsterkörper (8) als Lehnenpolster über ein Kniehebelsystem (18) relativ zum Unterbau bzw. Gestell (11) wenigstens stufenweise zwischen der aufgerichteten Sitzposition und der abgesenkten Liegeposition (Fig. 10) verstellbar abgestützt ist.

2. Polstersitz nach Anspruch 1, dadurch gekennzeichnet, daß sämtliche Polsterkörper (8, 9, 10) in Richtung der Achsen ihrer Dreh- bzw. Klappgelenke (12 und 13) eine Abmessung haben, die mindestens der Breite zweier Sitz- und/oder Liegeplätze entspricht (Fig. 1 bis 6), daß vorzugsweise der erste Polsterkörper bzw. das Lehnenpolster (8) und der dritte Polsterkörper (10) in Richtung quer zu den Achsen der Dreh- bzw. Klappgelenke (12 und 13) eine größere Abmessung haben als der zweite Polsterkörper bzw. das Sitzpolster (9), und diese Abmessung des dritten Polsterkörpers (10) annähernd um die Höhe des Unterbaus bzw. Gestells (11) größer ist als die betreffende Abmessung des zweiten Polsterkörpers bzw. Sitzpolsters (9) (Fig. 11 und 12) sowie zweckmäßig die Abmessung des ersten bzw. Lehnen-Polsterkörpers (8) etwa der Abmessung des dritten Polsterkörpers (10) entspricht und dessen freies Ende zu integrierten Kopfstützen ausgestaltet ist (Fig. 4 bis 6), wobei gegebenenfalls das freie Ende des dritten Polsterkörpers (10) in seiner der Liegeposition entsprechenden Stellung (Fig. 10) auf einer Stützkonsole bzw. einem Sockel (41) ruht (Fig. 10).

3. Polstersitz nach Anspruch 1 oder 2,
dadurch gekennzeichnet,
daß die Dreh- bzw. Klappgelenke zwischen dem ersten Polsterkörper (8) und dem zweiten Polsterkörper (9) jeweils an Seitenwangen (16b und 17b) von Winkelkonsolen (16 und 17) ausgebildet sind, deren Sockelschenkel (16a und 17a) ihre Verankerung an der Rückseite bzw. Unterseite der Polsterkörper (8 und 9) haben (Fig. 11 und 12).

4. Polstersitz nach einem der Ansprüche 1 bis 3,
dadurch gekennzeichnet,
daß die Dreh- bzw. Klappgelenke (13) zwischen dem zweiten Polsterkörper (9) und dem dritten Polsterkörper (10) von mehreren Scharnieren gebildet sind, deren Befestigungsschenkel jeweils an der Unterseite dieser Polsterkörper (9 und 10) angreifen (Fig. 11 und 12).

5. Polstersitz nach einem der Ansprüche 1 bis 3,
dadurch gekennzeichnet,
daß am Sockelschenkel (17a) jeder mit dem zweiten Polsterkörper (9) verbundenen Winkelkonsole (17) eine um eine horizontale Achse (15a) frei drehbare Spurrolle (15) lagert, die zwischen einer Tragschiene (14a) und einer Leitschiene (14b) der auf dem Unterbau bzw. Gestell (11) angeordneten Führungen (14) aufgenommen ist (Fig. 11 und 12).

6. Polstersitz nach einem der Ansprüche 1 bis 5,
dadurch gekennzeichnet,
daß die Führungen (14) auf dem Unterbau bzw. Gestell (11) einen wenigstens über einen Teil (14c) ihrer wirksamen Länge von hinten nach vorne ansteigenden Verlauf haben (Fig. 7 bis 12), daß dabei zweckmäßig die Führungen (14) etwa über die Hälfte ihrer wirksamen Länge einen stetig, aber relativ steil ansteigenden Verlauf haben (14c) während sie über den übrigen Teil (14d) ihrer Länge jedoch etwa horizontal verlaufen (Fig. 7 bis 11), und daß vorzugsweise die Tragschienen (14a) der Führungen (14) unmittelbar von dem oberen Holm eines Seitenrahmens (11b) gebildet sind, während als Leitschienen (14b) der Führungen (14) Bügel dienen, die über ihre Enden (14e, 14f) und ggfs. durch Zwischenstege (14g) auf Abstand fest mit dem Holm des Seitenrahmens (11b) verbunden sind (Fig. 11 und 12).

7. Polstersitz nach einem der Ansprüche 1 bis 6,
dadurch gekennzeichnet,
daß die zwischen dem ersten Polsterkörper bzw. Lehnenpolster (8) und dem Unterbau bzw. Gestell (11) als Stützvorrichtung angeordneten Kniehebelsysteme (18) jeweils an der Seitenwange (16b) der mit dem ersten Polsterkörper bzw. Lehnenpolster (8) verbundenen Winkelkonsolen (16) mit relativ großem Abstand von den Dreh- bzw. Klappgelenken (12) angreifen (Fig. 11 und 12), daß vorteilhafterweise jedes Kniehebelsystem (18) aus zwei unmittelbar hintereinandergeschalteten Kniehebeln (18a und 18b) besteht und dabei das Kniegelenk (21) des zweiten Kniehebels (18b) in einer ortsfest am Unterbau bzw. Gestell (11) angeordneten Führungskulisse (22) verschiebbar gehalten ist, während der erste Hebelarm (18c) des ersten Kniehebels (18a) um eine im Unterbau bzw. Gestell (11) gelagerte Achse (19) verschwenkbar ist und dessen Kniegelenk (20) auf einem Kreisbogen hierzu verlagert (Fig. 7 bis 12) daß dabei zweckmäßig die an gegenüberliegenden Seiten des Unterbaus bzw. Gestells (11) angeordneten beiden Kniehebelsysteme (18) durch eine Welle (19) und vorzugsweise zusätzlich noch über eine die Kniegelenke (21) miteinander kuppelnde Achse (21a) miteinander bewegungsschlüssig gekuppelt und über einen Handhebel (24) gemeinsam betätigbar sind (Fig. 11 bis 13), daß nützlicherweise der Betätigungs-Handhebel (24) am Unterbau bzw. Gestell (11) in mehreren, z. B. fünf, Bedienungslagen, vorzugsweise durch eine Federrastvorrichtung fixierbar ist (25) und damit eine entsprechende Anzahl verschiedener Stützstellungen der Kniehebelsysteme (18) für den Polsterkörper bzw. das Lehnenpolster (8) festlegbar sind (Fig. 11) und daß ggfs. die Führungskulissen (22) für die Kniehebelsysteme (18) am Unterbau bzw. Gestell (11) bogenförmig gekrümmt verlaufen und dabei von unten nach oben sowie zugleich von vorne nach hinten geneigt angeordnet sind (Fig. 7 bis 12).

8. Polstersitz nach einem der Ansprüche 1 bis 7,
dadurch gekennzeichnet,
daß die Arretiervorrichtung (27) für den zweiten Polsterkörper bzw. das Sitzpolster (9) aus einem fest am Unterbau bzw. Gestell (11) sitzenden Anschlagnocken (28) und einem diesem zugeordneten Hakenschnäpper (30, 31) besteht, mit denen ein Stütz- und Riegelnocken (29) an der Unterseite des Polsterkörpers bzw. Sitzpolsters (9) zusammenwirkt, wobei der Hakenschnäpper (30, 31) durch eine Handhabe (32) ausrückbar ist (Fig. 11), und dabei vorteilhaft auch der dritte Polsterkörper (10) am zweiten Polsterkörper bzw. Sitzpolster (9) durch einen Federschnäpper (33) lagefixiert und dieser Federschnäpper (33) mittels einer Handhabe (40) ausrückbar ist (Fig. 14).

9. Polstersitz nach einem der Ansprüche 1, 2, und 8,
dadurch gekennzeichnet,
daß entweder die Stützkonsole (41) aus einem am dritten Polsterkörper (10) verschwenkbar angelenkten Bügelfuß besteht (Fig. 10) oder aber der Stützsockel vom Unterbau benachbart eingebauter Polstersitze, z. B. Fahrer- und Beifahrersitz (2 und 3) gebildet ist (Fig. 3) wobei sinnvollerweise auch im Bereich der Dreh- bzw. Klappgelenke (13) oder Scharniere zwischen dem zweiten Polsterkörper (9) und dem dritten Polsterkörper (10) als Stützkonsole ein Bügelfuß (42) oder dergleichen verschwenkbar angelenkt ist (Fig. 10) und/oder eine konsolenartige, einwärts gerichtete Abbiegung der Anschlagnockens (28) eine Unterstützung für den zweiten Polsterkörper (9) bildet (Fig. 10 und 13).

10. Polstersitz nach einem der Ansprüche 1 bis 9,

dadurch gekennzeichnet,

daß die Seitenwangen (11c) des Unterbaues bzw. Gestells (11) durch einen rohrförmigen Profilholm (11e) miteinander verbunden sind, der in seinem Inneren und/oder an seinen Enden Befestigungs- und Verankerungsstellen für Sicherheitsgurte aufweist, wobei Ausschnitte (45, 46) zu den Befestigungs- und Verankerungsstellen (43 und 44) in seinem Inneren führen (Fig. 15).

## Claims

1. A cushioned seat (5), in particular for building into a motor vehicle (1) designed as a multipurpose automobile, the seat cushion (9) and the back cushion (8) of which through alteration of their position relatively to the base (11), e.g., a frame, are convertible from at least one sitting position into at least one lying position, where a third cushion body (10) is movably associated with the seat cushion (9) to fold through 180° with respect to the base (11) and in the sitting position lies underneath the seat cushion and in the lying position is in front of the seat cushion, the seat cushion (9) and back cushion (8) being permanently connected at their transverse sides by a turning or folding joint (12) for mutual angular movement,

characterized in

that the third cushion body (10) is also permanently connected to the second cushion body (9) at or near their adjacent transverse sides (9b, 10a) by turning or folding joints (13),

that the axis of the turning or folding joints (12) between the first cushion body (8) and the second cushion body (9) lies at least near to their upper faces, whilst the axis of the turning or folding joints (13) between the second cushion body (9) and the third cushion body (10) is arranged at or near their undersides,

that moreover all of the turning or folding joints (12 and 13) are designed for an angular movement of at least approximately 180°, that further the second cushion body (9) near to the turning or folding joints (12) with the first cushion body (8) is supported (15) at its underside on the base or frame (11) in guides (14) running in parallel with its side edges, to be able to shift to a limited extent as well as at the same time to swing upwards through at least approximately 90°, that furthermore the second cushion body (9) in its normal position forming the seat cushion may be locked (27) to the base or frame (11) against shifting in the guides (14) and against lifting, whilst at the same time the third cushion body (10) is received underneath the second cushion body (9) in the base or frame (11) and is fixed (33) detachably to the second cushion body (9),

that the first cushion body (8) is movable from the sitting position (7) into the lying position by displacement of the second cushion body (9) in the guides (14) via the turning or folding joints (12),

and that if necessary the first cushion body (8) is supported as the back cushion to be adjustable via a hinged-lever system (18) relatively to the base or frame (11) at least in steps between the upright sitting position and the lowered lying position (Figure 10).

2. A cushioned seat as in Claim 1,

characterized in that

all of the cushion bodies (8, 9, 10) have in the direction of the axes of their turning or folding joints (12 and 13) a dimension which corresponds with at least the width of two seats and/or berths (Figures 1 to 6), that preferably the first cushion body or back cushion (8) and the third cushion body (10) in the direction transverse to the axes of the turning or folding joints (12 and 13) have a greater dimension than the second cushion body or seat cushion (9), and this dimension of the third cushion body (10) is greater by approximately the height of the base or frame (11) than the dimension in question of the second cushion body or seat cushion (9: Figures 11 and 12) and also the dimension of the first or back cushion body (8) advantageously corresponds approximately with the dimension of the third cushion body (10) and its free end is shaped into integrated head-supports (Figures 4 to 6), the free end of the third cushion body (10) in its position corresponding with the lying position (Figure 10) resting if necessary upon a supporting bracket or a pedestal (41; Figure 10).

3. A cushioned seat as in Claim 1 or 2,

characterized in that

the turning folding joints between the first cushion body (8) and the second cushion body (9) are made each case on sidewalls (16b and 17b) of angle-brackets (16 and 17), the base arms (16a and 17a) of which have their anchorage against the back or respectively the underside of the cushion bodies (8 and 9; Figures 11 and 12).

4. A cushioned seat as in one of the Claims 1 to 3,

characterized in that

the turning or folding joints (13) between the second cushion body (9) and the third cushion body (10) are formed of a number of hinges the fixing arms of which engage in each case with the underside of these cushion bodies (9 and 10; Figures 11 and 12).

5. A cushioned seat as in one of the Claims 1 to 3,

characterized in that

on the base arm (17a) of each angle-bracket (17) connected to the second cushion body (9) a guide roller (15) is supported to be able to turn freely about a horizontal axis (15a) and is received between a bearer rail (14a) and a guiderail (14b) of the guides (14) arranged on the base or frame (11; Figures 11 and 12).

6. A cushioned seat as in one of the Claims 1 to 5,

characterized in that

the guides (14) on the base or frame (11) have a trend which at least over part (14c) of its effective length rises from the rear towards the front (Figures 7 to 12), that in that case the guides usefully have over about half of their effective length a trend rising constantly but relatively steeply (14c) whilst, however, over the remaining part (14d) they run approximately horizontally (Figures 7 to 11), and that preferably the bearer rails of the guides (14) are formed directly by the upper spar of a sideframe (11b) whilst as the guiderails (14b) of the guides (14) yokes are used, which by their ends (14e, 14f) and if necessary by intermediate struts (14g) are connected firmly to the spar of the sideframe (11b) at a distance from it (Figures 11 and 12).

7. A cushioned seat as in one of the Claims 1 to 6,

characterized in that

the hinged-lever systems (18) arranged between the first cushion body or back cushion (8) and the base or frame (11) as the supporting device engage in each case relatively far from the turning or folding joints (12) with the sidewalls (16b) of the angle-brackets (16) connected to the first cushion body or back cushion (8; Figures 11 and 12), that each hinged-lever system (18) advantageously consists of two hinged levers (18a and 18b) connected directly one behind the other and in that case the kneejoint (21) of the second hinged lever (18b) is supported to be able to shift in a slideblock guide (22) arranged fixed to the base or frame (11), whilst the first lever arm (18c) of the first hinged lever (18a) is able to swing about an axis (19) supported in the base or frame (11) and its kneejoint (20) is displaced along a circular arc about it (Figures 7 to 12), that in that case the two hinged-lever systems (18) arranged on opposite sides of the base or frame (11) are usefully coupled together in locked motion through a shaft (19) and preferably in addition via a spindle (21a) coupling the kneejoints (21) together and are actuable together by a handle (24; Figures 11 to 13), that the actuator handle (24) may in a useful way be fixed (25) to the base or frame (11) in a number of, e.g., five operating positions, preferably by a spring catch mechanism and thereby a corresponding number of positions of the hinged-lever systems (18) in support of the cushion body or back cushion (8) may be established (Figure 11) and that if necessary the slideblock guides (22) for the hinged-lever systems (18) run curled in the shape of an arc on the base or frame (11) and in that case are arranged sloping from the bottom upwards as well at the same time as from the front towards the rear (Figures 7 to 12).

8. A cushioned seat as in one of the Claims 1 to 7,

characterized in that

the locking mechanism (27) for the second cushion body or seat cushion (9) consists of a stoplug (28) seated firmly on the base or frame (11) and a hook-catch (30, 31) associated with it, with which a supporting and locking cam (29) on the underside of the cushion body or seat cushion (9) cooperates, in which case the hook-catch (30, 31) nay be disengaged by a handle (32; Figure 11), and in that case the third cushion body (10) is also fixed in position on the second cushion body or seat cushion (9) by a spring catch (33) and this spring catch (33) may be disengaged by means of a handle (40; Figure 14).

9. A cushioned seat as in one of the Claims 1, 2 and 8,

characterized in that

either the supporting bracket (41) consists of a stirrup-foot hinged in a pivot to the third cushion body (10; Figure 10) or else the supporting pedestal is formed by the base of adjacently built-in cushioned seats, e.g., the driver's and front passenger's seats (2 and 3; Figure 3), in which case logically in the region of the turning or folding joints (13) or hinges between the second cushion body (9) and the third cushion body (10) a stirrup-foot (42) or the like is also hinged in a pivot as a supporting bracket (Figure 10) and/or a bracketlike inwards directed deflection of the stoplug (28) forms a support for the second cushion body (9) (Figures 10 and 13).

10. A cushioned seat as in one of the Claims 1 to 9,

characterized in that

the sidewalls (11c) of the base or frame (11) are connected together by a profiled tubular spar (11e) which exhibits inside and/or at the ends of it fastening and anchoring points for safety belts, in which case cutouts (45, 46) lead inside it to the fastening and anchoring points (43 and 44) (Figure 15).

**Revendications**

1. Siège rembourré (5) qui est destiné notamment à être monté dans un véhicule automobile (1) à usages multiples et dont l'élément de siège rembourré (9) et l'élément de dossier rembourré (8) peuvent être déplacés, par modification de leur position par rapport à l'infrastructure (11), par exemple par rapport à un bâti, pour passer au moins d'une position assise à au moins une position couchée, l'élément de siège rembourré (9) étant associé à un troisième élément rembourré (10) qui peut pivoter de 180° par rabattement par rapport à l'infrastructure (11) et qui, dans le cas de la position assise, se trouve au-dessous de l'élément de siège rembourré et, dans le cas de la position couchée, en avant de l'élément de siège rembourré et l'élément de siège rembourré (9) et l'élément de dossier rembourré (8) étant constamment reliés, au-niveau de leurs côtés transversaux, par une articulation (12) permettant le pivotement ou le rabattement pour leur déplacement angulaire relatif, caractérisé en ce que le troisième élément rembourré (10) est constamment relié au deuxième élément rembourré (9) au niveau ou à proximité de leurs côtés transversaux voisins (9b, 10a) par des articulations (13) assurant le pivotement ou le rabattement, en ce que l'axe des articulations (12) assurant le pivotement ou le rabattement est placé entre le premier élément rembourré (8) et le deuxième élément rembourré (9), au moins à proximité de leur côté supérieur tandis que l'axe des articulations (13) assurant le pivotement ou le rabattement est entre le deuxième élément rembourré (9) et le troisième élément rembourré (10) au niveau ou à proximité de leur côté inférieur, en ce que toutes les articulations (12, 13) assurant le pivotement ou le rabattement sont conçues pour un déplacement angulaire d'au moins 180° environ, en ce que le deuxième élément rembourré (9) peut se déplacer d'une manière limitée, sur l'infrastructure ou sur le bâti (11), à proximité des articulations (12) assurant le pivotement et le rabattement, vers le premier élément rembourré (8), au niveau de son côté inférieur dans des dispositifs de guidage (14) orientés parallèlement à ses bords latéraux et est en même temps maintenu (15) de manière à pouvoir pivoter d'au moins 90° environ vers le haut, en ce que, dans sa position de base dans laquelle il constitue l'élément de siège rembourré, le deuxième élément rembourré (9) peut être bloqué (27) de manière à ne pas pouvoir se déplacer dans les dispositifs de guidage (14) ni être soulevé tandis qu'en même temps le troisième élément rembourré est engagé dans l'infrastructure ou le bâti (11) au-dessous du deuxième élément rembourré (9) et est fixé, de manière à être amovible (33), au deuxième élément rembourré (9), en ce que le premier élément rembourré (8) peut être déplacé pour passer de la position assise (7) à la position couchée par déplacement du deuxième élément rembourré (9) dans les dispositifs de guidage (14) sous l'action des articulations (12) assurant le pivotement et le rabattement et en ce que, le cas échéant, le premier élément rembourré (8) constituant le dossier rembourré est appuyé de manière à pouvoir se déplacer, sous l'action d'un système de leviers coudés (18), par rapport à l'infrastructure ou au bâti (11), au moins graduellement, pour passer de la position redressée assise à la position abaissée couchée (Figure 10).

2. Siège rembourré selon la revendication 1, caractérisé en ce que tous les éléments rembourrés (8, 9, 10) ont, dans la direction des axes de leurs articulations (12, 13) assurant le pivotement ou le rabattement, une dimension correspondant à la largeur d'au moins deux places assises et/ou couchées (Figure 1 à 6), en ce que, de préférence, le premier élément rembourré ou dossier rembourré (8) et le troisième élément rembourré (10) ont, dans la direction transversale par rapport aux axes des articulations (12 et 13) assurant le pivotement et le rabattement, une dimension plus grande que le deuxième élément rembourré ou siège rembourré (9) et que cette dimension du troisième élément rembourré (10) dépasse d'environ la hauteur de l'infrastructure ou du bâti (11) la dimension correspondante du deuxième élément rembourré ou siège rembourré (9) (Figures 11 et 12), que la dimension du premier élément rembourré ou dossier rembourré (8) correspond approximativement à la dimension du troisième élément rembourré (10) et que l'extrémité libre de cet élément comporte des appuis de tête incorporés (Figures 4 à 6), l'extrémité libre du troisième élément rembourré (10) prenant appui, dans sa position (Figure 10) qui correspond à la position couchée, sur une console d'appui ou sur un socle (41) (Figure 10).

3. Siège rembourré selon l'une des revendications 1 ou 2, caractérisé en ce que les articulations assurant le pivotement ou le rabattement situées entre le premier élément rembourré (8) et le deuxième élément rembourré (9) sont montées sur des pièces latérales (16b et 17b) de consoles angulaires (16 et 17) dont les branches de socle (16a et 17a) sont ancrées du côté arrière ou inférieur des éléments rembourrés (8 et 9) (Figures 11 et 12).

4. Siège rembourré selon une des revendications 1 à 3, caractérisé en ce que les articulations (13) assurant le pivotement ou le rabattement situées entre le deuxième élément rembourré (9) et le troisième élément rembourré (10) sont constituées par plusieurs charnières dont les branches de fixation s'engagent du côté inférieur de ces éléments rembourrés (9 et 10).

5. Siège rembourré selon une des revendications 1 à 3, caractérisé en ce qu'il comporte, sur la branche de socle (17a) de chaque console angulaire (17) reliée au deuxième élément rembourré (9), un galet (15) qui peut tourner librement autour d'un axe horizontal (15a) et qui est engagé entre un rail de support (14a) et un rail de guidage (14b) des dispositifs de guidage (14) montés sur l'infrastructure ou le bâti (11) (Figures 11 et 12).

6. Siège rembourré selon unes revendications 1 à 5, caractérisé en ce que les dispositifs de guidage (14) montés sur l'infrastructure ou bâti (11) comportent un trajet ascendant d'avant en arrière sur au moins une partie de leur longueur utile (Figures 7 à 12), en ce que les dispositifs de guidage (14) comportent, sur la moitié environ de leur longueur utile un trajet fortement ascendant (14c) tandis que sur le reste (14d) de leur longueur ils sont horizontaux (Figures 7 à 11) et en ce que les rails de support (14a) des dispositifs de guidage (14) sont directement constitués par le longeron supérieur d'un cadre latéral (11b) tandis que les rails de guidage (14b) des dispositifs de guidage (14) sont constitués par des étriers qui sont reliés à leurs extrémités (14e, 14f) et, le cas échéant, par des traverses (14g) au longeron du cadre latéral (11b) situé à une certaine distance (Figures 11 et 12).

7. Siège rembourré selon une des revendications 1 à 6, caractérisé en ce que des systèmes de leviers coudés (18) constituant un dispositif d'appui situé entre le premier élément rembourré ou dossier rembourré (8) et l'infrastructure ou bâti (11) agissent (Figures 11 et 12) au niveau de la pièce latérale (16b) des consoles angulaires reliées au premier élément rembourré ou dossier rembourré (8) à une distance assez grande des articulations (12) assurant le pivotement ou le rabattement, en ce que chaque système de leviers coudés (18) est constitué par deux leviers coudés (18a et 18b) qui se suivent immédiatement et que l'articulation (21) du deuxième levier coudé (18b) est maintenue de manière à pouvoir se déplacer dans une coulisse de guidage (22) montée à poste fixe dans l'infrastructure au bâti (11) tandis que le premier bras de levier (18c) du premier levier coudé (18a) peut pivoter autour d'un axe (19) monté dans l'infrastructure ou le bâti (11) et que son articulation (20) se déplace pour cela sur un de cercle (Figures 7 à 12), en ce que, dans ce cas, les deux systèmes de leviers coudés (18) montés sur des côtés opposés de l'infrastructure ou bâti (11) sont accouplés, de manière à s'entraîner dans leurs déplacements, par un arbre (19) et, de préférence également, par un axe (21a) et accouplent l'un à l'autre les articulations 21 de manière qu'elles s'entraînent dans leurs déplacements et puissent être mises en action simultanément (Figure 11 à 13) par l'intermédiaire d'un levier à main (24) en ce que le levier de commande à main (24) peut être fixé (25) à l'infrastructure ou bâti (11) dans plusieurs positions de fonctionnement, de préférence par un dispositif d'arrêt à ressort, que, de ce fait, un nombre correspondant de positions d'appui différentes peuvent être déterminées pour les systèmes de leviers coudés (18) de l'élément rembourré ou dossier rembourré (8) (Figure 11) et en ce que, le cas échéant, les coulisses de guidage (11) des systèmes de leviers coudés (18) sur l'infrastructure ou le bâti (11) sont incurvées en arc de cercle et sont inclinées de bas en haut et en même temps d'avant en arrière (Figures 7 à 12).

8. Siège rembourré selon une des revendications 1 à 7, caractérisé en ce que le dispositif de blocage (27) du deuxième élément rembourré ou siège rembourré (9) est constitué par une came de butée (28) située sur l'infrastructure ou bâti (11) et par un dispositif d'enclenchement à crochet (30, 31) correspondant avec lesquels coopère une came d'appui et de verrouillage (29) sur le côté inférieur de l'élément rembourré ou siège rembourré (9), le dispositif d'enclenchement à crochet (30, 31) pouvant être déplacé sous l'action d'une commande à main (32) et le troisième élément rembourré (10) étant fixé au deuxième élément rembourré ou siège rembourré (9) par un dispositif d'enclenchement (33) à ressort et ce dispositif d'enclenchement à ressort pouvant être déplacé vers l'extérieur au moyen d'un poignée (40) (Figure 14).

9. Siège rembourré selon une des revendications 1, 2 et 8, caractérisé en ce que la console d'appui (41) est constituée par un pied d'étrier qui s'articule, de manière à pouvoir pivoter, sur le troisième élément rembourré (10) ou que le socle d'appui est constitué par l'infrastructure de sièges rembourrés voisins, par exemple du siège du conducteur ou du passager assis à côté du conducteur (2 et 3) (Figure 3), le siège comprenant également, dans la zone des articulations (13) assurant le pivotement ou le rabattement ou dans la zone de charnières, entre le deuxième élément rembourré (9) et le troisième élément rembourré (10), comme console d'appui, un pied d'étrier (42) ou un dispositif analogue montés de manière à pouvoir pivoter (Figure 10) et/ou une partie incurvée de la came de butée (28) en forme de console dirigée vers le constituant un appui pour le deuxième élément rembourré (9) (Figures 10 et 13).

10. Siège rembourré selon une des revendications 1 à 9, caractérisé en ce que les parties latérales (11c) de l'infrastructure sont reliées l'une à l'autre par un ou plusieurs longerons tubulaires qui, à l'intérieur et/ou à leurs extrémités, comportent des dispositifs de fixation et d'ancrage de ceintures de sécurité, des échancrures (45, 46) permettant l'accès par l'intérieur aux zones de fixation et d'ancrage (43 et 44) (Figure 15).

Fig.1

Fig.2

Fig.3

Fig. 4

Fig. 5

3

Fig. 6a

Fig. 6b

Fig. 6c

Fig. 7

Fig. 8

## Fig. 9

## Fig. 10

EP 0 221 229 B1

Fig.11

Fig. 12

Fig. 13

Fig. 14

Fig. 15